# EUROPÄISCHE PATENTANMELDUNG

(11) **EP 1 228 940 A2**
(43) Veröffentlichungstag der Anmeldung: **07.08.2002**
(21) Anmeldenummer: 02000274.7
(22) Anmeldetag: 15.01.2002
(51) Int. Cl.: B62D 1/04

(54) **Fahrzeuglenkrad**

(30) Priorität: 01.02.2001 DE 20101868 U
(71) Anmelder: TRW Automotive Safety Systems GmbH & Co. KG, 63743 Aschaffenburg (DE)
(72) Erfinder: Drefahl, Klaus, 63457 Hanau (DE); Fleckenstein, Jupp, 63856 Bessenbach (DE); Kreuzer, Martin, 63839 Kleinwallstadt (DE)
(74) Vertreter: Kitzhofer, Thomas, Dipl.-Ing.

(57) **Zusammenfassung**

Ein Fahrzeuglenkrad mit einem Skelett aus Druckgußmaterial (36) ist dadurch gekennzeichnet, daß in dem Druckgußmaterial (36) eine Armierung (20,22,24) eingebettet ist.

## Beschreibung

Die Erfindung betrifft ein Fahrzeuglenkrad mit einem Skelett aus Druckgußmaterial.

Skelette von Fahrzeuglenkrädem werden zunehmend aus Druckgußmaterial gefertigt, um die immer komplizierteren Formen des Skelettes überhaupt fertigen zu können und um das Gewicht so gering wie möglich zu halten.

Die Erfindung schafft ein Fahrzeuglenkrad mit einem Skelett, das bei nach wie vor geringem Gewicht eine höhere Festigkeit aufweist als bislang bekannte. Dies wird bei einem Fahrzeuglenkrad der eingangs genannten Art dadurch erreicht, daß in dem Druckgußmaterial eine Armierung eingebettet ist. Das bedeutet, die Armierung ist vollständig in das Druckgußmaterial eingebettet, nicht etwa von außen aufgesetzt, so daß keine komplizierte Herstellung erforderlich ist. Die Armierung hält bleibend Abschnitte des Druckgußmaterials zusammen. Die Armierung sollte eine höhere Zug- und Biegefestigkeit als das Druckgußmaterial haben.

Vorzugsweise weist die Armierung Durchgangsöffnungen auf, die vom Druckgußmaterial durchdrungen sind, so daß eine mechanische, formschlüssige Verankerung der Armierung im Druckgußmaterial an zahlreichen Stellen erreicht wird. Auch ein Lösen des Druckgußmaterials von der Armierung beim Bruch des Druckgußmaterials kann damit, unabhängig von der Bruchstelle, verhindert werden.

Das Druckgußmaterial ist vorzugsweise Aluminium oder Magnesium und das Blech Stahl oder Aluminium.

Bei einem Blech aus Aluminium oder einer Armierung aus Aluminium besteht darüber hinaus der Vorteil, daß beim Recycling kein Separieren der Aluminiumarmierung und des Aluminiumdruckgusses oder Magnesiumdruckgusses erforderlich ist. Darüber hinaus wird sich die Aluminiumoberfläche beim Einströmen des heißen Aluminiums oder Magnesiums geringfügig anlösen, so daß eine Art Lösungsverbund entsteht, der neben der mechanischen Verankerung der Armierung im Druckguß eine zusätzliche Verbindung schafft.

Das Skelett hat einen Nabenabschnitt und wenigstens eine davon ausgehende Speiche. Die Armierung verläuft vom Nabenabschnitt bis in die Speiche, sie kann sogar noch bis in den Bereich des Lenkradkranzes verlaufen. Da der Bruch eines Lenkrads vorzugsweise am Übergang von der Speiche zum Nabenabschnitt erfolgt, ist die Armierung im besonders kritischen Bereich des Lenkrades vorgesehen.

Zu diesem Zweck ist bei Verwendung eines Blechs vorgesehen, daß dieses einen sich axial erstreckenden, eine Öffnung im Nabenabschnitt umschließenden ringförmigen Teil und einen davon ausgehenden flachen Abschnitt mit in die Speiche ragenden Ausläufern hat. Der ringförmige Teil umgibt die Nabe und erhöht die Stabilität der Nabe, so daß das Blech nicht nur den Übergang vom Nabenabschnitt zur Speiche verstärkt, sondern den Nabenabschnitt selbst. Damit kann auch weniger Druckgußmaterial im Bereich des Nabenabschnittes vorgesehen sein, was für die Gewichtsverringerung vorteilhaft ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines Skelettes des erfindungsgemäßen Fahrzeuglenkrads;
- Figur 2 eine Draufsicht auf ein Blech, das in das Skelett nach Figur 1 eingebettet ist;
- Figur 3 eine Seitenansicht des Bleches von Figur 2; und
- Figur 4 eine Schnittansicht durch ein Teil des Skelettes von Figur 1 im Bereich des Nabenabschnitts und einer Speiche.

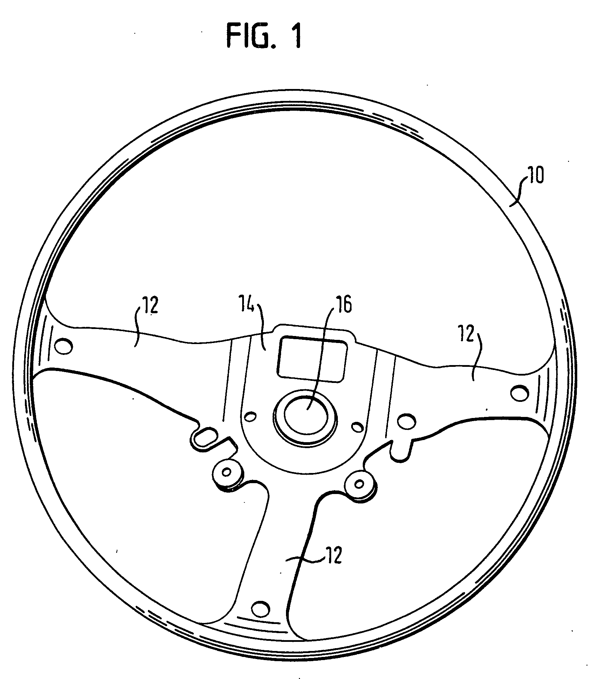

In Figur 1 ist ein Fahrzeuglenkrad, genauer gesagt sein Skelett, dargestellt, das verschiedene Abschnitte hat, nämlich einen Kranz 10, Speichen 12 und einen Nabenabschnitt 14, von dem die Speichen 12 ausgehen. Der Nabenabschnitt 14 hat darüber hinaus eine zentrische Öffnung 16 zur späteren Aufnahme einer Lenkwelle. Das Skelett besteht aus Aluminium- oder Magnesiumdruckgußmaterial.

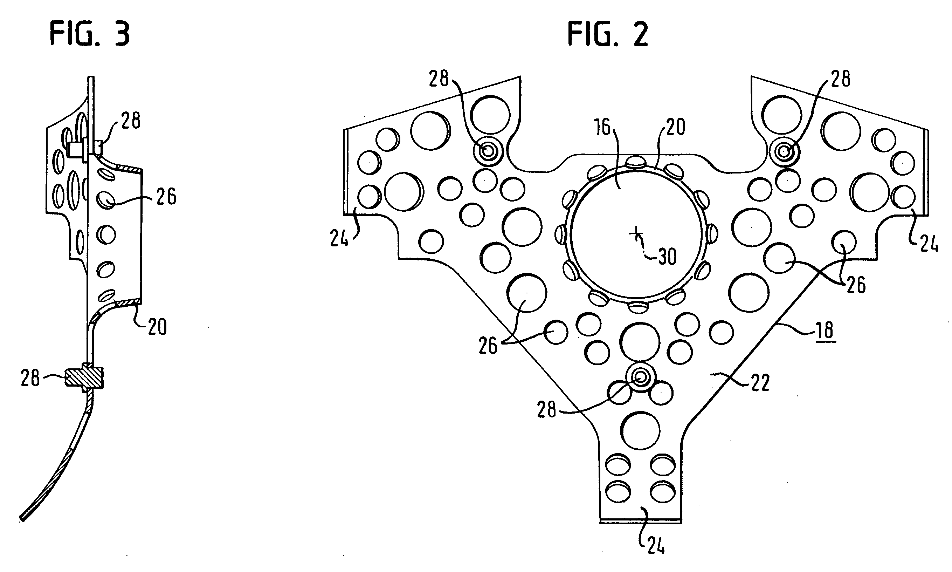

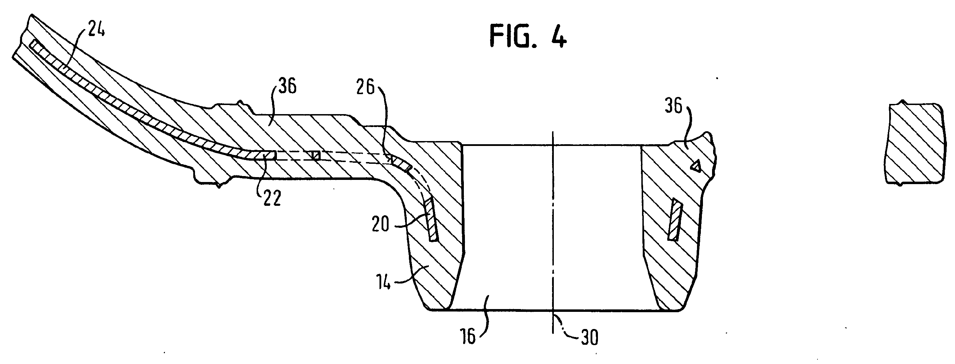

Ein in den Figuren 2 und 3 dargestelltes Blech 18 bildet eine Armierung, die im Druckgußmaterial eingebettet ist, wie Figur 4 exakter zu entnehmen ist. Das Blech 18 hat ein sich axial (axial bedeutet, in Richtung der gedachten Achse 30 der Öffnung 16) erstreckenden, die Öffnung 16 im Nabenabschnitt 14 umschließenden ringförmigen Teil 20 und einem davon ausgehenden, flachen Abschnitt 22 mit Ausläufern 24, die der Form der Speichen folgend leicht gebogen sind. Das Blech 18 ist durch Stanzen und anschließendes Tiefziehen hergestellt. Das Blech 18 besitzt sowohl im Bereich des ringförmigen Teils 20 als auch in allen übrigen Abschnitten eine Vielzahl von Durchgangsöffnungen 26. Drei Haltebolzen 28, die um die Achse 30 in 120°-Abstand zueinander liegen, sind in Öffnungen eingepreßt und dienen der Halterung des Bleches in einer Druckgußform, damit das Blech 18 den gewünschten Abstand von der Innenseite der Form hat.

Das Blech, welches aus Stahl oder Aluminium besteht, wird also über die Bolzen 28 in der Druckgußform positioniert. Anschließend wird Aluminium oder Magnesium eingebracht, welches das Blech vollständig umgibt, so daß dieses im Druckgußmaterial eingebettet ist, wie Figur 4 zeigt. Die Bolzen 28 können, müssen aber nicht entfernt werden. Da das Druckgußmaterial auch die Öffnungen 26 durchdringt, ergibt sich eine gute mechanische Einbindung des Bleches 18 in das Druckgußmaterial, welches in Figur 4 mit dem Bezugszeichen 36 versehen ist.

Das so gefertigte Skelett schafft ein Fahrzeuglenkrad, bei dem auch bei hoher Belastung des Druckgußmaterials 36 keine freien Teile entstehen.

Das Blech 18 ist, wenn es aus Stahl ist, etwa 1 mm, wenn es aus Aluminium ist, ca. 2 mm dick.

## Patentansprüche

1. Fahrzeuglenkrad, mit
einem Skelett aus Druckgußmaterial,
**dadurch gekennzeichnet, daß**
in dem Druckgußmaterial eine Armierung eingebettet ist.

2. Fahrzeuglenkrad nach Anspruch 1, **dadurch gekennzeichnet, daß** die Armierung Durchgangsöffnungen (26) aufweist, die vom Druckgußmaterial (36) durchdrungen sind.

3. Fahrzeuglenkrad nach einem der vorhergehenden Ansprüche, **dadurch gekennzeichnet, daß** das Skelett einen Nabenabschnitt (14) und wenigstens eine davon ausgehende Speiche (12) hat und daß die Armierung vom Nabenabschnitt (14) bis in die Speiche (12) verläuft.

4. Fahrzeuglenkrad nach einem der vorhergehenden Ansprüche, **dadurch gekennzeichnet, daß** die Armierung ein Blech (18) ist.

5. Fahrzeuglenkrad nach Anspruch 4, **dadurch gekennzeichnet, daß** das Blech (18) aus Stahl oder Aluminium ist.

6. Fahrzeuglenkrad nach einem der vorhergehenden Ansprüche, **dadurch gekennzeichnet, daß** das Druckgußmaterial Aluminium oder Magnesium ist.

7. Fahrzeuglenkrad nach Anspruch 3 und einem der Ansprüche 4 bis 6, **dadurch gekennzeichnet, daß** das Blech (18) einen sich axial erstreckenden, eine Öffnung (16) in dem Nabenabschnitt (14) umschließenden, ringförmigen Teil (20) und einen, vom ringförmigen Teil (20) ausgehenden, flachen Abschnitt (22) mit in die Speichen ragenden Ausläufern (24) aufweist.

8. Fahrzeuglenkrad nach einem der vorhergehenden Ansprüche, **dadurch gekennzeichnet, daß** an der Armierung Bolzen (28) zur Positionierung der Armierung beim Druckgiessen befestigt sind.

9. Fahrzeuglenkrad nach einem der vorhergehenden Ansprüche, **dadurch gekennzeichnet, daß** die Armierung vollständig von Druckgußmaterial umgeben ist.
